# DEMANDE DE BREVET EUROPEEN

(11) **EP 1 256 414 A2**
(43) Date de publication de la demande: **13.11.2002**
(21) Numéro de dépôt: 02380007.1
(22) Date de dépôt: 10.01.2002
(51) Int. Cl.: B23Q 1/54

(54) **Système cinématique pour poupée de machine**

(30) Priorité: 10.05.2001 ES 200101080
(71) Demandeur: FUNDACION FATRONIK, 20870 Elgoibar (Gipuzkoa) (ES)
(72) Inventeur: Saenz Fernandez, Agustin J., 20870 Elgoibar (Gipuzkoa) (ES); Collado Jimenez, Valentin, 20870 Elgoibar (Gipuzkoa) (ES); Gimenez Olazabal, Marta, 20870 Elgoibar (Gipuzkoa) (ES)
(74) Mandataire: Urizar Barandiaran, Miguel Angel

(57) **Abrégé**

Système cinématique pour poupée de machine, qui se compose d'une première plateforme pouvant se déplacer suivant les axes OX, OY, c trois ou quatre bras de longueur variable, qui sont unis, à l'une de leurs extrémités, au moyen de joints, à la première plateforme et, à l'autre extrémité, au moyen de joints, à une seconde plateforme ou poupée, et disposant, dans une structure sans mouvement relatif par rapport à la première plateforme, d'un ensemble guide/glissière suivant l'axe OZ, un joint de rotation étant uni rigidement à la glissière, joint qui, à son tour, est uni à la seconde plateforme, le joint de rotation ayant deux ou trois degrés de liberté selon que l'on utilise respectivement trois ou quatre bras.

Application prévue dans le domaine des machines-outils.

## Description

Le système cinématique pour poupée, qui fait l'objet de l'invention, est applicable à des poupées de machines-outils telles que, par exemple, des fraiseuses, des centres d'usinage ou des machines automatiques d'assemblage.

Usuellement, les éléments ou bras porte-poupées travaillent en flexion, d'où des déformations importantes dues aux efforts énormes subis par la poupée.

En projetant ces machines, il existe la nécessité, pas toujours possible avec des systèmes cinématiques traditionnels, d'atteindre de grandes vitesses, ce qui, à son tour, est à l'origine du problème extrêmement grave d'atteindre ces grandes vitesses dans des espaces et un temps extrêmement réduits ou, ce qui est la même chose, des accélérations très élevées.

Pour surmonter ces inconvénients, la technologie a fait appel à des systèmes cinématiques fondés sur la cinématique parallèle, dont les barres travaillent axialement en compression/traction, en les dotant d'une grande rigidité et en leur permettant d'atteindre des vitesses et des accélérations importantes.

On connaît déjà des systèmes cinématiques pour poupée de machine, qui se composent de:
a) une première plateforme,
b) «n» bras, de longueur variable, qui sont unis, à l'une de leurs extrémités, au moyen de joints, à la première plateforme et, à l'autre extrémité, au moyen de joints, à:
c) una seconde plateforme ou poupée porte-outil/effecteur.

Ce système cinématique peut être observé sur EP-0 202 206, où l'on dispose un bras intermédiaire qui s'étend de la seconde plateforme à la première plateforme. La première plateforme comprend un joint universel avec un trou central de passage, où passe le bras intermédiaire.

Cette solution comporte des inconvénients, car la masse mobile du bras intermédiaire peut être considérable et, en outre, variable, en fonction de la position de l'outil/effecteur.

La position si éloignée de ce joint universel de la deuxième plateforme est également un inconvénient avec pour conséquence des déformations dues aux efforts de torsion transmis par l'outil/effecteur.

La présente invention surmonte ces inconvénients en postulant une structure fixe sur laquelle glisse, selon un axe OZ perpendiculaire à la première plateforme, une glissière qui est unie à la seconde plateforme par un joint de rotation ayant deux degrés de liberté de rotation, si trois bras sont utilisés, et trois degrés de liberté de rotation, si quatre bras sont utilisés.

Il n'existe plus dans l'invention la masse mobile du bras intermédiaire (comme dans EP-0 202 206), ce qui fait que l'ensemble de sa masse mobile (pour un même nombre de bras) est plus réduite.

Cela suppose un avantage dans les caractéristiques dynamiques inertielles de la structure, car les accélérations qui peuvent être obtenues dans l'outil ou l'effecteur sont plus grandes avec des bras télescopiques d'actionnement identiques.

Le système de l'invention envisage, en outre, une structure dont la masse mobile est toujours la même et indépendante de la position de l'outil ou effecteur dans le volume de travail de la machine. Ceci, joint au fait précédemment expliqué de toujours posséder une masse mobile plus réduite, se traduit par la possibilité d'ajuster les paramètres de régulation des moteurs d'actionnement d'une façon plus optimale que dans le cas de l'EP-0 202 206, où cet ajustement doit être fait pour la configuration la plus défavorable, qui est toujours plus mauvaise que pour le système de l'invention. Le tout se traduit par une amélioration de la précision dans le positionnement dynamique de la machine.

Dans le système de l'invention, le joint de rotation peut être conçu pour être aussi près qu'on le veut de l'outil ou effecteur. Les efforts de torsion non supportés par les bras télescopiques ne se propagent pas le long d'une distance plus courte jusqu'à leur arrivée à la structure fixe. De cette manière, les déformations se produisant à la suite des efforts dans l'outil ou effecteur seront moindres et on pourra toujours concevoir la structure de façon plus rigide que la structure de l'EP-0 202 206.

La fabrication et le montage sont plus simples que pour l'EP-0 202 206, car, dans le système de l'invention, le joint de rotation est un joint commercial et il n'a pas à le traverser. De surcroît, ceci donne lieu au fait que le joint puisse être plus compact, que le bras intermédiaire puisse donc être plus rigide et, par conséquent, que la structure finale à obtenir puisse également être plus rigide.

Pour mieux comprendre l'objet de la présente invention, on représente dans les plans une forme préférentielle de réalisation pratique, susceptible de changements accessoires qui n'en dénaturent pas le fondement.

La figure 1 est une représentation schématique d'une première réalisation pratique du système qui fait l'objet de l'invention..

La figure 2 est une représentation schématique d'une deuxième réalisation pratique du système qui fait l'objet de l'invention..

On décrit ci-dessous un exemple de réalisation pratique, non limitative, de la présente invention.

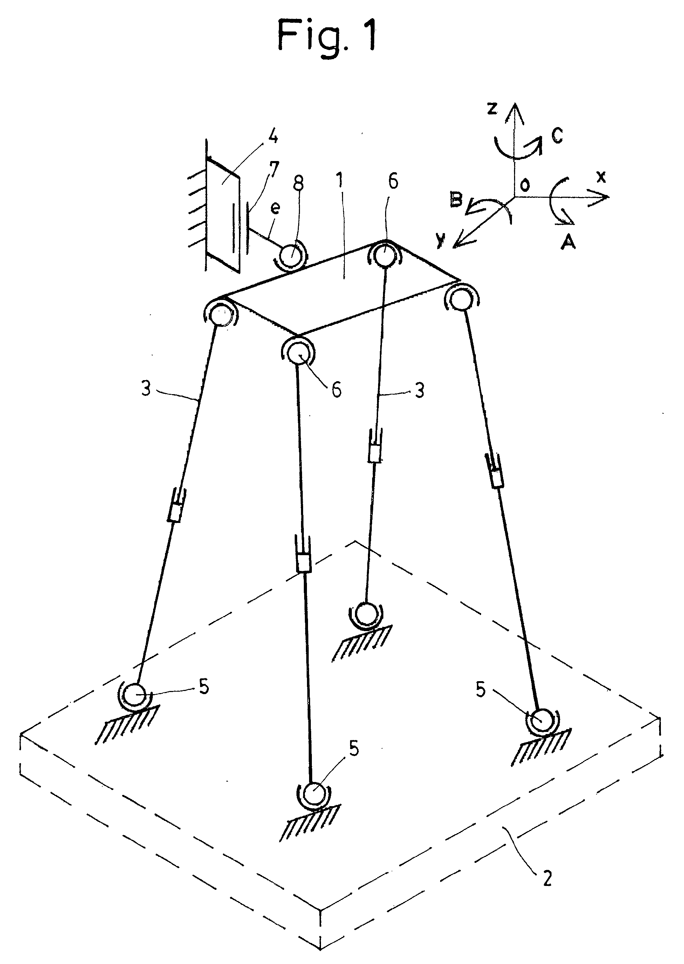

On dispose (figure 1) une première plateforme (2), qui peut être fixe ou dotée d'un mouvement suivant les axes OX, OY, par exemple, sur deux chariots conventionnels d'une machine-outil.

Sur cette première plateforme (2), on assemble quatre bras de longueur variable, extensibles ou télescopiques (3) au moyen, pour chacun d'entre eux, d'un joint (5) ayant trois degrés de liberté, autrement dit un joint sphérique.

Chaque bras (3) est uni, à l'une de ses extrémités, à une seconde plateforme (1) au moyen, pour chacun d'entre eux, d'un joint (6) ayant trois degrés de liberté, autrement dit, un joint sphérique.

Cette seconde plateforme (1) constitue le plateau ou poupée à laquelle est fixée l'outil de la machine correspondante (non représenté).

On dispose, dans une structure (4) qui n'a pas de mouvement relatif par rapport à la première plateforme (2), un guide (4') et la glissière (7) correspondante ayant un mouvement suivant l'axe OZ, c'est-à-dire perpendiculaire à la première plateforme (2). Un joint de rotation sphérique (8) est uni à la seconde plateforme (1) et un bras ou élément passif (e) unit la glissière (7) et le joint sphérique (8).

Les dimensions du bras ou élément passif (e) peuvent être de zéro (autrement dit, ne pas exister, de sorte que la glissière (7) et le joint sphérique (8) soient directement assemblés entre eux) ou toute autre.

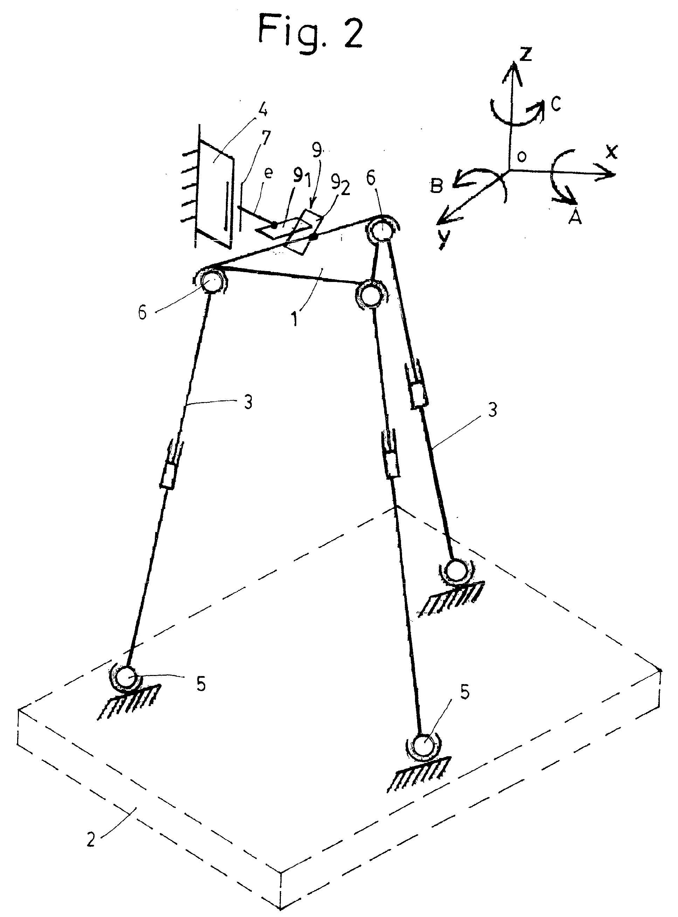

Sur la figure 2, on a représenté une variante de la figure 1, où les seuls changements consistent dans le fait qu'au lieu d'utiliser quatre bras, on n'utilise que 3 bras (3) extensibles, et l'élément passif (e) unit la glissière (7) à la seconde plateforme (1) au moyen d'un joint (9) ayant deux degrés de liberté, par exemple, un joint de cardan, un composant (9₁) du joint (9) étant uni à l'élément passif (e) et l'autre composant (9₂) du joint (9) à la seconde plateforme (1).

Avec le système objet de l'invention, avec quatre bras (3), on arrive à faire que la seconde plateforme (1), ou l'outil qui y est fixé, dispose, du fait du mouvement simultané des bras extensibles (3), de quatre degrés de liberté consistant en: translation suivant l'axe OZ et rotations A, B, C autour des axes OX, OY, OZ. Dans la variante qui utilise trois bras (figure 2), on obtient trois degrés de liberté consistant dans la translation suivant l'axe OZ et les rotations A,B suivant la direction des axes de rotation du joint de cardan (9).

On dispose des moyens pour produire le mouvement des bras (3) et pour assurer le contrôle et la position du mouvement de la seconde plateforme (1).

## Revendications

1. Système cinématique pour poupée de machine, qui se compose d'une première plateforme pouvant se déplacer suivant les axes OX, OY, de trois ou quatre bras de longueur variable, qui sont unis, à l'une de leurs extrémités, au moyen de joints, à la première plateforme et, à l'autre extrémité, au moyen de joints, à une seconde plateforme ou poupée, se caractérisant par le fait qu'il dispose, dans une structure sans mouvement relatif par rapport à la première plateforme, d'un ensemble guide/glissière suivant l'axe OZ, un joint de rotation étant uni rigidement à la glissière, joint qui est uni, à son tour, à la seconde plateforme, le joint de rotation ayant deux ou trois degrés de liberté, selon que l'on utilise respectivement trois ou quatre bras.
